# EUROPEAN PATENT SPECIFICATION

(11) **EP 2 796 902 B1**
(45) Date of publication and mention of the grant of the patent: **14.06.2017**
(21) Application number: 13165014.5
(22) Date of filing: 23.04.2013
(51) Int. Cl.: G01V 8/00, G01S 13/89, G01N 22/00

(54) **Millimeter Wave Scanning Imaging System**
Millimeterwellen-Scan-Bildgebungssystem
Système d'imagerie par balayage d'ondes millimétriques

(43) Date of publication of application: 29.10.2014
(73) Proprietor: Spinner GmbH, 80335 München (DE)
(72) Inventor: Nickel, Dr. Hans-Ulrich, 85579 Neubiberg (DE); Nüßler, Dirk, 53560 Vettelschoß (DE); Krebs, Christian, 56076 Koblenz (DE)
(74) Representative: Lohr, Georg

(56) References cited:
- GB-A- 1 006 523
- JP-A- 2004 170 345
- JP-A- 2006 258 499
- JP-A- 2012 093 223
- US-A- 2 825 059
- US-A- 3 076 188
- US-A- 4 654 613
- US-A- 5 039 948
- US-A1- 2003 137 466
- US-A1- 2005 270 247
- US-A1- 2006 214 835
- US-A1- 2010 265 117

## Description

### Field of the invention

The invention relates to a millimeter wave scanning imaging system for generating images of objects by using electromagnetic waves with wavelengths in a millimeter range.

### Description of the related art

A food scanning device using electromagnetic RF radiation is disclosed in DE 10 2009 047300 A1. It has a source for generation for RF radiation and directing this radiation to a food article. The reflected radiation is received by a receiver and analyzed to obtain information about the composition of the food.

A scanning imaging system using millimeter waves is disclosed in US 2002/0044276 A1. Herein, a scanning reflector is used to sweep through a periodic scan pattern to redirect millimeter wave energy from a target object to a detector.

The US 2010/0265117 A1 document discloses an active imaging system for imaging a target. Accordingly the problem to overcome in this document was that of transferring a millimeter wave microwave electromagnetic signal between a rotating and a stationary component by using quasi-optical waveguides and in order to transmit the signal over 90° bends.

Document US 6870512 describes a scanning system provided with a stationary circular waveguide, a rotary joint, a rotating circular waveguide and a rotating antenna. It transmits a H₁₁ mode signal along the above system.

### Summary of the invention

The problem to be solved by the invention is to provide a millimeter wave scanner for continuous scanning of objects. A further object is to achieve a high-resolution scan with low distortion. Furthermore, an object is to provide a comparatively simple, cost-efficient, and maintenance-free scanner. Another object of the invention is to provide a rotational scanning section, which delivers and receives electromagnetic waves with a constant and scanning angle independent polarization.

Solutions of the problem are described in the independent claims. The dependent claims relate to further improvements of the invention.

In a first embodiment, the scanning imaging system uses electromagnetic waves, preferably radio frequency energy (or signals) to scan objects. Preferably, the wavelengths of the electromagnetic waves are in a millimeter range. A preferred frequency range is between 30 GHz and 300 GHz. The embodiments disclosed herein may also be used for centimeter waves (3 GHz to 30 GHz) or submillimeter waves (300 GHz to 3 THz). Also light may be used for scanning.

The objects to be scanned are preferably moved or transported into a first direction by a transport means, which preferably is a conveyor belt. Other transport means, like trolleys or sliders, may be used. Herein, a conveyor belt is preferred, as it provides transport of the objects at a predetermined and constant speed, and it has a constant object throughput. At least one antenna for emitting and/or receiving electromagnetic waves is moved into a second direction, approximately at a right angle to the first direction. It is preferred to have a separated first transmission antenna and a second receiving antenna. There may also be a plurality of transmission antennas and/or receiving antennas. It is further preferred to have a gap between the antennas, through which the objects are moved. This allows for transmission measurement of the objects. In an alternate embodiment, both antennas may be arranged at one side of the object to allow for reflection measurements. Alternatively, there may be a common antenna for transmitting and receiving of the signals. To obtain a continuous movement of the transmitting and receiving antennas, they are preferably arranged at a rotating body. This rotating body preferably is disk-shaped. It may be a disk holding at least one of the antennas. It may hold and/or support further components, like position sensors or balancing weights. It is further preferred, if there are two rotating bodies, rotating synchronously and holding the transmitting antenna and the receiving antenna opposite to each other. The rotating bodies may be driven by belts or a gear. It is further preferred, if the rotating bodies have a fluid bearing, preferably an air bearing or a liquid bearing, or alternatively a magnetic bearing. Such frictionless bearings allow for comparatively high rotational speeds, and therefore high scanning speeds.

The transmitting antenna is connected to a transmitter system, while the receiving antenna is connected to a receiver system. The transmitter system delivers RF energy, while the receiver system receives the energy and generates signals to be used in an image-processing unit to generate images. Preferably, the image-processing unit evaluates the signal as received by the receiving antenna in its amplitude and/or phase and most preferably compares this to the signal transmitted by the transmitting antenna. Furthermore, changes in polarization may be evaluated. Preferably, the transmitter system and/or the receiver system are stationary and not rotating, as this reduces the rotating mass and therefore increases rotating speed and scanning speed. For transfer of the RF energy (or also referred herein as electromagnetic waves or the signal) from the transmitter system to the transmitting antenna, a first waveguide system is provided. This first waveguide system has at least a first rotary joint to couple between stationary and rotating parts. There is preferably a second waveguide system for coupling electromagnetic waves from the receiving antenna to the receiver. It is also preferred, if this waveguide system has a second rotary joint to couple electromagnetic waves between rotating and stationary parts.

The transmitting and receiving antennas cross the conveyor belt with an arc-shaped movement from one side to the other side. Preferably, this movement has at the center of the conveyor belt a tangent perpendicular to the direction of movement of the conveyor belt. Generally, this arc shaped movement roughly represents a movement perpendicular (or under a right angle) to the direction of movement of the conveyor belt.

In a preferred embodiment, the waveguide system keeps the orientation of the electromagnetic field or the polarization of the electromagnetic waves constant over rotation, at least over the arc-shaped segment of the scanning movement on the conveyor belt. This is done by using waves having H₁₁ mode from the transmitter system. The transmitter system may have a transmitter which directly generates waves having H₁₁ mode in a circular waveguide. An alternative may be converting the electromagnetic waves from the transmitter, which may be guided by a rectangular waveguide in an H₁₀ mode into waves having H₁₁ mode by a mode converter. Such a mode converter may be a waveguide having a continuous transition between the both waveguide types. It may also be integrated into an OMT (orthomode transducer). There may also be an OMT anywhere else in the signal path between the transmitter and the receiver. This H₁₁ mode is guided in a first stationary circular waveguide, which is connected to a first rotary joint. The first stationary circular waveguide may be a very short piece of a waveguide, which may be integrated into either the mode converter or the first rotary joint. This first rotary joint is a rotary joint for connecting circular waveguides using a H₁₁ mode on both sides. Most preferably, it is a circular waveguide having at least one λ/4 transformer for electrically closing the gap between the rotating parts. The rotating side of the first rotary joint is coupled to a first rotary circular waveguide for transferring the electromagnetic waves to the first antenna. Preferably, the first antenna is a circular, conical or exponential horn antenna. Generally, although horn antennas are preferred, the antennas used herein may be any kind of antennas suitable for transmitting and receiving the millimeter wave signals. Preferably, the horn antennas have a circular cross section and may also be referred to as circular cross-sectioned antenna or horn. They may further have a conical or exponential shape.

By using the before mentioned rotary joint and the circular waveguides, the orientation (and polarization) of the electric fields remains constant over rotation with respect to the stationary side. This helps to improve scan quality and the solution. Herein, the terms "circular waveguide" and "circular antenna" relate to waveguides and antennas having an approximately circular cross section. Such antennas may further have a conical shape.
Preferably, a similar arrangement is provided at the second side with the second antenna for receiving signals connected to the receiver system. Here also, the receiver system may comprise a receiver which directly receives H₁₁ mode signals from a circular waveguide or a mode converter is provided for converting such H₁₁ mode signals into a H₁₀ mode within a rectangular waveguide.

In an alternative arrangement, not forming part of the present invention, a state of the art rotary joint is used to transfer the signal from the second antenna, which acts a receiving antenna, to the receiver. Such a rotary joint generally may have inputs and outputs as rectangular waveguides using H₁₀ modes. Due to the rotation of the polarization of the receiving antenna system (including the rotary joint), there may be some attenuation of the signal, which may be compensated by calculation. Although the previous embodiment is related to circular waveguides using H₁₁ modes, there may be other modes having similar characteristics and which may be used as alternatives. Such modes are HE₁₁ mode in ridged or corrugated circular waveguides or circular waveguides coated with a dielectric. A further arrangement, not forming part of the present invention, would use HE₁₁ modes with dielectric waveguides. Such dielectric waveguides may also be optical fibers.

Another arrangement, not forming part of the present invention, relates to a method for operating a scanning imaging system having a stationary transmitter coupled to a rotating circular antenna. The signals from the transmitter are transferred via a first stationary rectangular waveguide in H₁₀ mode via a mode converter for converting an H₁₀ mode signal into an H₁₁ mode signal, which is further coupled via a first stationary circular waveguide, carrying the H₁₁ signal to a first rotary joint for coupling the H₁₁ mode signal into a first rotating circular waveguide which furthermore couples the signal to the antenna. This method may be combined with all further embodiments disclosed herein.

### Description of Drawings

In the following, the invention will be described by way of example, without limitation of the general inventive concept, on examples of embodiment with reference to the drawings.
- Fig. 1: shows a first embodiment of a transmissive scanning imaging system in a side view.
- Fig. 2: shows the first embodiment of a scanning imaging system in a top view.
- Fig. 3: shows a second embodiment of a reflective scanning imaging system in a side view.
- Fig. 4: shows a scanning process in detail.
- Fig. 5: shows the signal path between transmitter and receiver.
- Fig. 6: shows an alternate embodiment, using standard rotary joints.
- Fig. 7: shows the orientation of the electromagnetic waves as transmitted by first circular antenna, in a top view.
- Fig. 8: shows the orientation of the electromagnetic waves as transmitted by first rectangular antenna, in a top view.
- Fig. 9: shows the effect of a non-rotating electrical field on scanning.
- Fig. 10: shows the effect of a rotating electrical field on scanning.

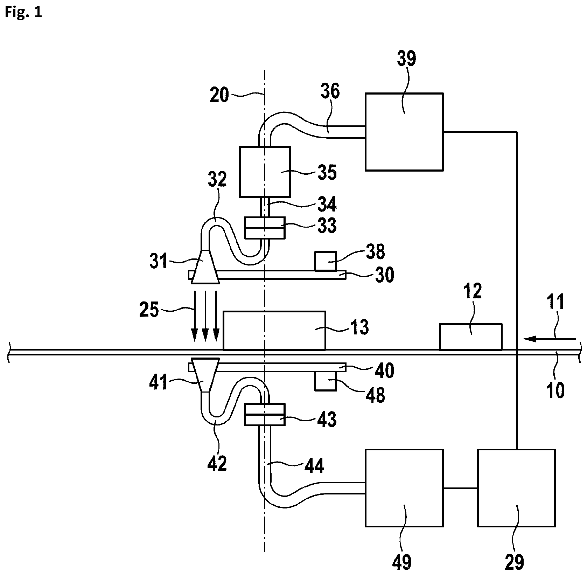

In Fig. 1, a first embodiment of a transmissive scanning imaging system is shown in a side view. The objects 12, 13 to be scanned are transported by a belt conveyor 10 in direction 11. For generating images of these objects, electromagnetic waves are generated by a transmitter 39, radiated to the objects by a first antenna 31, received by a second antenna 41, in propagating direction 25, and forwarded to a receiver 49. An image-processing unit 29 receives the signal of the receiver 49 together with further signals, like synchronization signals of transmitter 39, and calculates an image of the objects. The image-processing unit 29 may deliver synchronization and/or control signals to the transmitter 39 and/or the receiver 49, and/or other components of the scanner. For scanning over the surface of the an object, the object is moved into a first direction by the conveyor belt, whereas the first antenna 31 and/or the second antenna 41 are moved in a direction approximately under a right angle to the direction of movement of the conveyor belt. More precisely, they perform a rotational movement crossing the conveyor belt in a specific sector of this movement, as will be described further below. For this purpose, at least a first rotating base 30 is provided. This first rotating base 30 is designed for holding at least a first antenna 31. There may be other components attached to the first rotating base, like auxiliary components 38, which may comprise at least one balancing weight for statically and/or dynamically balancing the rotating base. The rotating base 30 is rotatable about an axis of rotation 20. Preferably, it is supported by at least one bearing, which is not shown in here. For coupling the first antenna 31 to the transmitter 39, a first rotating waveguide 32 is connected to the antenna 31. This is further connected to a first rotary joint 33, which is again connected at its stationary side via a first stationary circular waveguide 34 to a mode converter 35. In an exemplary embodiment of a transmitter system, the transmitter 39 is connected via a first stationary rectangular waveguide 36 to said mode converter. In the receiving section, there is a second rotating base 40 corresponding to first rotating base 30. Both rotating bases are rotating synchronously, so that the first antenna 31 at the first rotating base 30 and the second antenna 41 at the second rotating base 40 are in a fixed position relative to each other, during rotation. There may be further auxiliary components 48 at the second rotating base, like electronic components or balancing weights. The second antenna 41 is connected via a second rotating circular waveguide 42, a second rotary joint 43, and a second stationary circular waveguide 44 to the receiver system, which comprises a receiver 49, which can directly receive H₁₁ mode signals from a circular waveguide.

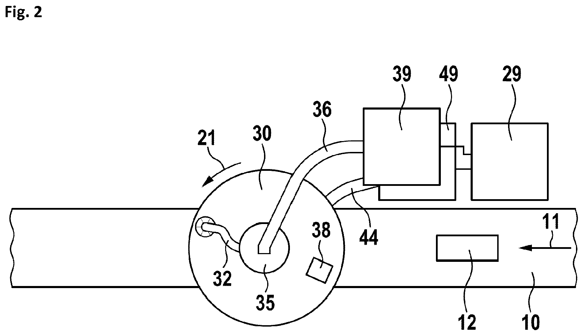

In Fig. 2, the first embodiment of a scanning imaging system is shown in a top view. Here, the direction of rotation 21 of the first rotating base 30 is shown. The first rotating base may also be rotating in the opposite direction.

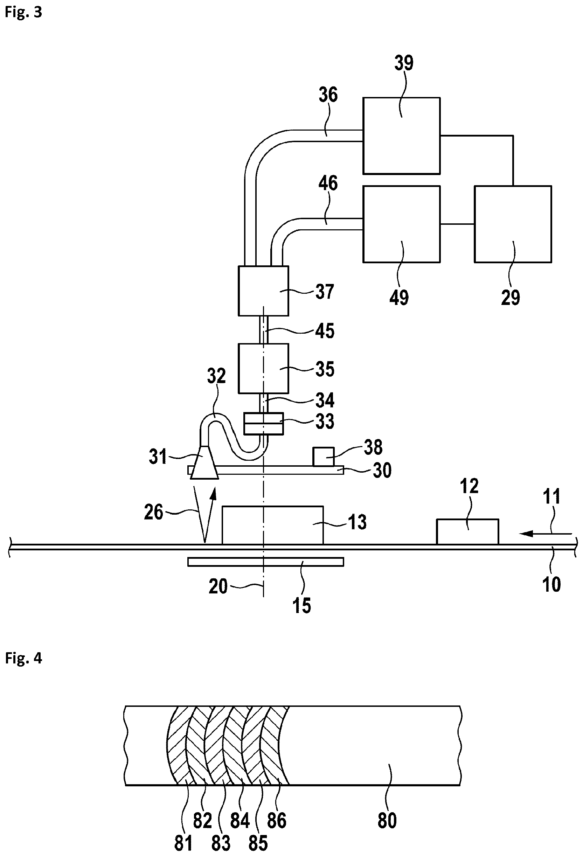

In Fig. 3, a second embodiment using a reflective mode is shown in a side view. Here, only a first antenna 31 is provided at a first rotating base. This antenna is used for transmitting the receiving electromagnetic waves. For coupling the same antenna to transmitter 39 and receiver 49 via first stationary rectangular waveguide 36 and second stationary rectangular waveguide 46, a direction selective coupling device 37 is provided. This may for example be a directional coupler or a magic-T. It is further coupled via a rectangular waveguide 45 to the mode converter 35. Furthermore, there may be an absorber 15 below the conveyor belt to absorb non-reflected radiation. During a scan, a signal is transmitted from the transmitter 39 via first stationary rectangular waveguide 36 and the direction selective coupling device 37, waveguide 45, mode converter 35, first stationary circular waveguide 34, rotary joint 33, first rotating circular waveguide 32, to first antenna 31. This antenna emits the signal into direction 26, which is reflected back and received by the same first antenna 31. From there, it is guided back by the components as described above to the direction selective coupling device 37, which guides the reflected signal via second stationary rectangular waveguide 46 to the receiver 49.

In Fig. 4, a scanning of an area 80 is shown in detail. The scanned area 80 may be the surface of conveyor belt 11, on which some objects 12, 13 are located. The first antenna 31 and the second antenna 41 perform a circular movement resulting in arch-shaped tracks 81, 82, 83, 84, 85, and 86. By placing these arch-shaped tracks adjacent to each other, the whole surface may be scanned.

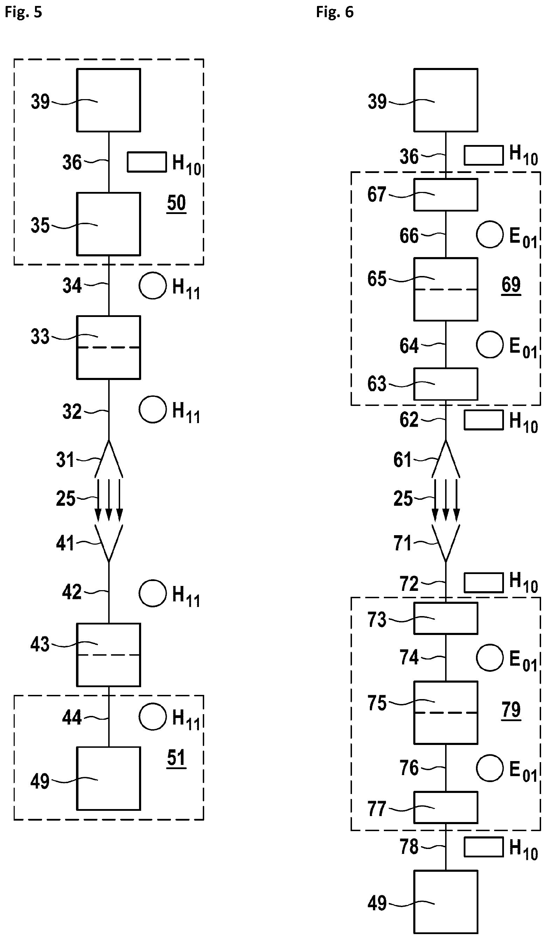

In Fig. 5, the signal path between transmitter 39 and receiver 49 is shown in detail. The electromagnetic waves are generated by a transmitter system comprising a transmitter 39, a first stationary rectangular waveguide 36, and a mode converter 35. In the detail, they are generated by transmitter 39 and are coupled by means of a first stationary rectangular waveguide 36 to a mode converter 35. In this figure, a cross-section of each waveguide together with the preferred transmission mode is shown. Accordingly, the first stationary rectangular waveguide 36 has a rectangular cross-section, and its preferred propagation mode is Hᵢₒ. The mode converter 35 converts the Hᵢₒ mode received by a rectangular waveguide into an Hₗ₁ mode in a first stationary circular waveguide 34. This signal in an Hₗ₁ mode from a circular waveguide is coupled by the first rotary joint 33 to another Hₗ₁ mode in first rotating circular waveguide 32. The signal propagating there through is emitted by first antenna 31 in direction of transmission 25. The signal received by the second antenna 41 is conducted by the second rotating circular waveguide 42 in an Hₗ₁ mode, and transferred by the second rotary joint 43 into the receiver system 51 in an Hₗ₁ mode. The receiver system comprises the second stationary circular waveguide 44 and the receiver 49.

In Fig. 6, an alternative arrangement, not forming part of the present invention, using standard rotary joints is shown. This embodiment is based on standard technology, using the preferred rectangular waveguides for transporting signals in Hᵢₒ mode. There are many rotary joints for H₁₀ mode signals having rectangular waveguide connectors available in the market. Such standard rotary joints 69, 79 include a first and second mode converter 67, 77, for converting an incoming H₁₀ mode of a rectangular waveguide into an outgoing E₀₁ mode of a circular waveguide 66, 76. This signal is further coupled by a circular rotary joint 65, 75 into another circular waveguide 64, 74, transporting the same E₀₁ mode. Finally, this is converted by a second mode converter 63, 73 back to an H₁₀ mode in a rectangular waveguide. The standard rotary joints 69, 79 as described herein may be operated in a direction as shown or into an opposite direction thereto. Accordingly the system uses a transmitter 39 producing signals into a first stationary rectangular waveguide 36 in H₁₀ mode coupling the signal over a standard rotary joint 69 via a first rotating rectangular waveguide 62 in H₁₀ mode to a rectangular transmission antenna 61. This signal is radiated into direction 25 to the second rectangular antenna 71. From there, it is again coupled through second rotating rectangular waveguide 72, using H₁₀ mode via a standard rotary joint 79 by a second stationary rectangular waveguide 78 using H₁₀ mode to the receiver 49.

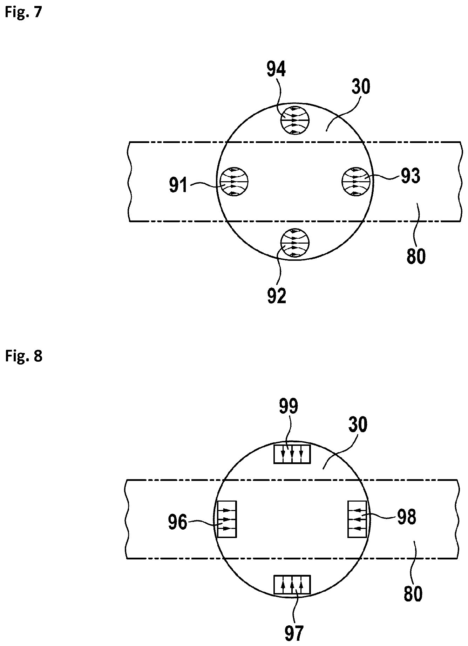

In Fig. 7, the orientation of the electromagnetic waves as transmitted by first circular antenna 31, in a top view is shown. This figure relates to the first embodiment as shown in Fig. 5. The arrows show the direction of the E-field (electrical field) in the cross-sections 91, 92, 93, 94 of a circular antenna 31, 41, at different positions, which are under an angle of approximately 90 degrees to each other. The direction of the E-field does not vary with rotation of the antenna, as it is coupled rotational-invariant through the circular waveguides 32, 34, and the circular rotary joint 33, as well as the circular antenna 31.

In Fig. 8, the orientation of the electromagnetic waves as transmitted by first rectangular cross-sectioned antenna is shown in a top view. This figure relates to the embodiment as described in Fig. 6. As the standard rotary joints 69 and 79 maintain the direction of the electrical field, this is always constant with respect to the rotating base and moves with rotation of the rotating base against the scanned area 80. This can be demonstrated by the E-field as shown by the arrows in the cross-sections 96, 97, 98, 99 of a rectangular cross-sectioned antenna 61, 71, at different positions, which are under an angle of approximately 90 degrees to each other. Here, the E-field is maintaining the direction from the outside of the rotating base to the center of rotation. Generally, the term "rectangular cross sectioned antenna" shall mean any antenna having a rectangular cross-section, like a pyramidal horn or a sectoral horn.

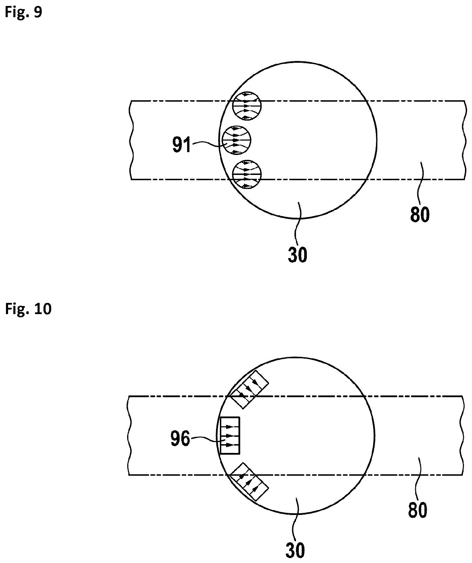

In Fig. 9, the effect of a non-rotating electrical field on scanning is shown. When scanning over the scanned area 80, the direction of the electrical field remains constant with respect to the scanned area, as shown by the arrows of the E-field, although it varies with respect to the rotating base 30. Having a constant orientation of the field and therefore a constant polarization allows to detect polarization modifying (polarizing) properties of the objects. This further helps to improve scanning precision and resolution.

In Fig. 10, the effect of rotating electrical field on scanning is shown. When scanning over the scanned area 80, the direction of the electrical field remains constant with respect to the rotating base 30 and rotates with respect to the scanned area 80, as shown by the arrows of the E-field.

### List of reference numerals

- 10: conveyor belt
- 11: direction of movement
- 12, 13: objects
- 20: axis of rotation
- 21: direction of rotation
- 25: propagation of electromagnetic waves
- 26: direction of reflected signal
- 29: image processing unit
- 30: first rotating base
- 31: first antenna
- 32: first circular waveguide
- 33: first rotary joint
- 34: first stationary circular waveguide
- 35: mode converter
- 36: first stationary rectangular waveguide
- 37: direction selective coupling device
- 38: first auxiliary components
- 39: transmitter
- 40: second rotating base
- 41: second antenna
- 42: second circular waveguide
- 43: second rotary joint
- 44: second stationary circular waveguide
- 45: rectangular waveguide
- 46: second stationary rectangular waveguide
- 48: second auxiliary components
- 49: receiver
- 50: transmitter system
- 51: receiver system
- 61: first rectangular antenna
- 62: first rotating rectangular waveguide
- 63: first rotating mode converter
- 64: first rotating circular waveguide
- 65: first rotary joint
- 66: first stationary circular waveguide
- 67: first stationary mode converter
- 69: standard rotary joints
- 71: second rectangular antenna
- 72: second rotating rectangular waveguide
- 73: second rotating mode converter
- 74: second rotating circular waveguide
- 75: second rotary joint
- 76: second stationary circular waveguide
- 77: second stationary mode converter
- 78: second stationary rectangular waveguide
- 79: standard rotary joints
- 80: scan area
- 81 - 86: scanned segments
- 91 - 94: electrical field of the circular antennas 31, 41
- 96 - 99: electrical field of the rectangular antennas 61, 71

## Claims

1. Millimeter wave scanning imaging system, for scanning objects (12, 13), comprising:
- a transport means (10) being a conveyor belt adapted to transport the objects (12, 13) in a first direction (11),
- a millimeter wave measurement system comprising at least a transmitter system (50) coupled to a first antenna (31), and a receiver system (51) coupled to a second antenna (41), the first antenna (31) and the second antenna (41) being arranged distant to each other and forming a gap through which the objects (12, 13) can be transported,
- a scanning system for an arc-shaped movement of the first antenna (31) and the second antenna (41) in a direction approximately under a right angle to the first direction,
wherein the first antenna (31) and the second antenna (41) are rotatable synchronous to each other,
a waveguide system comprising at least a first rotary joint is provided for transfer of RF energy from the transmitter system to a transmitting antenna, **characterized in that**
the transmitter system (50) generates a H₁₁ mode signal, carried in a first stationary circular waveguide, which is adapted to be integrated into a first rotary joint, wherein said rotary joint is coupled between stationary and rotating parts and adapted for connecting circular waveguides using H₁₁ mode signals on both sides, and which furthermore couples the signal to the first antenna (31), which is a circular and/or conical antenna, and the waveguide system keeps the orientation of the electromagnetic field or the polarization of the electromagnetic waves constant over rotation, at least over an arc-shaped segment of the scanning movement on the conveyor belt.

2. Millimeter wave scanning imaging system, for scanning objects (12, 13), comprising:
- a transport means (10) being a conveyor belt adapted to transport the objects (12, 13) in a first direction (11),
- a millimeter wave measurement system comprising at least a transmitter system (50) coupled to an antenna (31), and a receiver system (51) coupled to the antenna (31), the antenna (31) being arranged distant to the transport means and forming a gap through which the objects (12,13) can be transported,
- a scanning system for an arc-shaped movement of the antenna (31) in a direction approximately under a right angle to the first direction,
wherein a waveguide system comprising at least a first rotary joint is provided for transfer of the RF energy from the transmitter system to a transmitting antenna,
**characterized in that**
the transmitter system (50) generates a H11 mode signal, carried in a first stationary circular waveguide, which is adapted to be integrated into a first rotary joint, wherein said rotary joint is coupled between stationary and rotating parts and adapted for connecting circular waveguides using H11 mode signals on both sides, and which furthermore couples the signal to the antenna (31), which is a circular antenna, the waveguide system keeps the orientation of the electromagnetic field or the polarization of the electromagnetic waves constant over rotation, at least over an arc-shaped segment of the scanning movement on the conveyor belt,
the antenna (31) is transmitting a signal (26), which may at least partially be reflected by at least one of the objects (12, 13) and which is received again by the antenna (41),
the received signal is forwarded through the first rotating circular waveguide (32), the rotary joint (33) and the first stationary circular waveguide (34) in an H₁₁ mode to the receiver system (51).

3. Scanning imaging system according to any one of the previous claims,
**characterized in that**
the transmitter system (50) comprises a transmitter (39) for generating a signal propagating through a first stationary rectangular waveguide (36) in H₁₀ mode via a mode converter (35) for converting an H₁₀ mode signal into an H₁₁ mode signal.

4. Scanning imaging system according to claim 1 or 2,
**characterized in that**
the transmitter system (50) comprises a transmitter (39) for generating a H₁₁ mode signal.

5. Scanning imaging system according to any one of the previous claims,
**characterized in that**
the receiver system (51) comprises a receiver (49) for receiving a signal propagating through a first stationary rectangular waveguide in H₁₀ mode via a mode converter for converting an H₁₁ mode signal into an H₁₀ mode signal.

6. Scanning imaging system according to claim 1 or 2,
**characterized in that**
the receiver system (51) comprises a receiver (49) for receiving a H₁₁ mode signal.

7. Scanning imaging system according to claim 1,
**characterized in that**
the second antenna (41) is coupled via a rotary joint (43) to the receiver (49).

8. Scanning imaging system according to claim 7,
**characterized in that**
the second antenna (41) is a circular cross sectioned antenna coupling a signal in an H₁₁ mode through a second rotating circular waveguide (42) and a second rotary joint (43) and further through a second stationary circular waveguide (44) to the receiver (49).

9. Scanning imaging system according to claim 7,
**characterized in that**
the second antenna is a rectangular cross-sectioned antenna (71) connected by a rectangular waveguide (72), a rotary joint (79) for rectangular waveguide, and a further rectangular waveguide (78) to the receiver (49).

10. Scanning imaging system according to any one of the previous claims,
**characterized in that**
the first transport means (10) is a belt conveyor.

11. Scanning imaging system according to any one of the previous claims,
**characterized in that**
an image-processing unit (29) coupled to the receiver (49) and/or the transmitter (39) is provided.

12. Scanning imaging system according to any one of the previous claims,
**characterized in that**
a mode converter (35) generates and/or receives a circular polarized H₁₁ mode signal.

## Patentansprüche

1. Millimeterwellen-Scan-Bildgebungssystem zum Scannen von Objekten (12, 13), umfassend:
- ein Transportmittel (10), welches ein für den Transport von Objekten (12, 13) in eine ersten Richtung (11) geeignetes Förderband ist,
- ein Millimeterwellen-Messsystem, umfassend zumindest ein an eine erste Antenne (31) gekoppeltes Sendesystem (50), und ein an eine zweite Antenne (41) gekoppeltes Empfangssystem (51), wobei die erste Antenne (31) und die zweite Antenne (41) entfernt zueinander angeordnet sind und einen Spalt bilden, durch welchen die Objekte (12, 13) transportiert werden können,
- ein Scan-System für eine bogenförmige Bewegung der ersten Antenne (31) und der zweiten Antenne (41) in eine Richtung ungefähr unter einem rechten Winkel zur ersten Richtung,
wobei die erste Antenne (31) und die zweite Antenne (41) drehbar synchron zueinander sind,
ein Wellenleitersystem umfassend zumindest einem ersten Drehübertrager zum Übertragen von HF-Energie von dem Sendesystem zu einer Sendeantenne,
**dadurch gekennzeichnet, dass**
das Sendesystem (50) ein H₁₁-Mode-Signal erzeugt, welches in einem ersten stationären kreisförmigen Wellenleiter übertragen wird, welcher dazu angepasst ist in einen ersten Drehübertrager integriert zu sein, wobei der Drehübertrager zwischen stationären und rotierenden Teilen gekoppelt ist und angepasst ist zum Verbinden von kreisförmigen Wellenleitern unter Verwendung von H₁₁-Mode-Signalen auf beiden Seiten, und welcher weiterhin das Signal zu der ersten Antenne (31) koppelt, welche eine zirkulare und/oder konische Antenne ist, und das Wellenleitersystem hält die Ausrichtung des elektromagnetischen Feldes oder die Polarisierung der elektromagnetischen Wellen konstant über die Rotation, zumindest über ein bogenförmiges Segment der Scan-Bewegung auf dem Förderband.

2. Millimeterwellen-Scan-Bildgebungssystem zum Scannen von Objekten (12, 13), umfassend:
- ein Transportmittel (10), welches ein für den Transport von Objekten (12, 13) in eine erste Richtung (11) geeignetes Förderband ist,
- ein Millimeterwellen-Messsystem, umfassend zumindest ein an eine Antenne (31) gekoppeltes Sendesystem (50), und ein an die Antenne (31) gekoppeltes Empfangssystem (51), wobei die Antenne (31) entfernt von dem Transportmittel angeordnet ist und einen Spalt ausbildend, durch welchen die Objekte (12, 13) transportiert werden können,
- ein Scansystem für eine bogenförmige Bewegung der Antenne (31) in eine Richtung ungefähr unter einem rechten Winkel zur ersten Richtung,
wobei das Wellenleitersystem umfassend zumindest einen ersten Drehübertrager zum Übertragen von HF-Energy von dem Sendesystem an die Sendeantenne bereitgestellt ist,
**dadurch gekennzeichnet, dass**
das Sendesystem (50) ein H₁₁-Mode-Signal erzeugt, welches in einem ersten stationären kreisförmigen Wellenleiter übertragen wird, welcher dazu angepasst ist, in einen ersten Drehübertrager integriert zu sein, wobei der Drehübertrager zwischen stationären und rotierenden Teilen gekoppelt ist und angepasst ist zum Verbinden von kreisförmigen Wellenleitern unter Verwendung von H₁₁-Mode-Signalen auf beiden Seiten, und welcher weiterhin das Signal mit der Antenne (31) koppelt, welche eine kreisförmige Antenne ist, das Wellenleitersystem die Ausrichtung des elektromagnetischen Feldes oder die Polarisierung der elektromagnetischen Wellen konstant über die Rotation hält, zumindest über ein bogenförmiges Segment der Scan-Bewegung auf dem Förderband,
die Antenne (31) ein Signal (26) sendet, welches zumindest teilweise von zumindest einem der Objekte (12, 13) reflektiert werden kann und welches von der Antenne (41) wieder empfangen wird,
das empfangene Signal durch den ersten rotierenden kreisförmigen Wellenleiter (32), den Drehübertrager (33) und den ersten stationären kreisförmigen Wellenleiter (34) in einem H₁₁-Mode zum Empfangssystem (51) weitergeleitet wird.

3. Scan-Bildgebungssystem nach einem der vorhergehenden Ansprüche,
**dadurch gekennzeichnet, dass**
das Sendesystem (50) einen Sender (39) umfasst zum Erzeugen eines Signals, welches sich durch einen ersten stationären rechteckigen Wellenleiter (36) im H₁₀-Mode über einen Modenwandler (35) zum Umwandeln des H₁₀-Mode-Signals in ein H₁₁-Mode-Signal ausbreitet.

4. Scan-Bildgebungssystem nach Anspruch 1 oder 2,
**dadurch gekennzeichnet, dass**
das Sendesystem (50) einen Sender (39) zum Erzeugen eines H₁₁-Mode-Signals umfasst.

5. Scan-Bildgebungssystem nach einem der vorhergehenden Ansprüche,
**dadurch gekennzeichnet, dass**
das Empfangssystem (51) einen Empfänger (49) umfasst zum Empfangen eines Signals, welches sich durch einen ersten stationären rechteckigen Wellenleiter im H₁₀-Mode über einen Modenwandler zum Umwandeln eines H₁₁-Mode-Signals in ein H₁₀-Mode-Signal ausbreitet.

6. Scan-Bildgebungssystem nach Anspruch 1 oder 2,
**dadurch gekennzeichnet, dass**
das Empfangssystem (51) einen Empfänger (49) zum Empfangen eines H₁₁-Mode-Signals umfasst.

7. Scan-Bildgebungssystem nach Anspruch 1,
**dadurch gekennzeichnet, dass**
die zweite Antenne (41) über einen Drehübertrager (43) mit dem Empfänger (49) gekoppelt ist.

8. Scan-Bildgebungssystem nach Anspruch 7,
**dadurch gekennzeichnet, dass**
die zweite Antenne (41) eine Antenne mit kreisförmigem Querschnitt ist, welche ein Signal in einem H₁₁-Mode durch einen zweiten rotierenden kreisförmigen Wellenleiter (42) und einen zweiten Drehübertrager (43) und weiter durch einen zweiten stationären kreisförmigen Wellenleiter (44) an den Empfänger (49) koppelt.

9. Scan-Bildgebungssystem nach Anspruch 7,
**dadurch gekennzeichnet, dass**
die zweite Antenne eine Antenne (71) mit rechteckigem Querschnitt ist, welche durch einen rechteckigen Wellenleiter (72), einen Drehübertrager (79) für rechteckige Wellenleiter und einen weiteren rechteckigen Wellenleiter (78) an den Empfänger (49) gekoppelt ist.

10. Scan-Bildgebungssystem nach einem der vorhergehenden Ansprüche,
**dadurch gekennzeichnet, dass**
das erste Transportmittel (10) ein Bandförderer ist.

11. Scan-Bildgebungssystem nach einem der vorhergehenden Ansprüche,
**dadurch gekennzeichnet, dass**
eine Bildverarbeitungseinheit (29) bereitgestellt ist, welche mit dem Empfänger (49) und/oder dem Sender (39) gekoppelt ist.

12. Scan-Bildgebungssystem nach einem der vorhergehenden Ansprüche,
**dadurch gekennzeichnet, dass**
ein Modenwandler (35) ein kreisförmiges polarisiertes H₁₁-Mode-Signal erzeugt und/oder empfängt.

## Revendications

1. Système de scanner à ondes millimétriques pour le balayage d'objets (12, 13), comprenant :
- un moyen de transport (10) qui est une bande transporteuse adaptée pour transporter les objets (12, 13) dans une première direction (11),
- un système de mesure à ondes millimétriques comprenant au moins un système émetteur (50) couplé à une première antenne (31) et un système récepteur (51) couplé à une deuxième antenne (41), la première antenne (31) et la deuxième antenne (41) étant disposées à distance l'une de l'autre et formant un intervalle à travers lequel les objets (12, 13) peuvent être transportés,
- un système de balayage pour un mouvement en arc de cercle de la première antenne (31) et de la deuxième antenne (41) dans une direction approximativement perpendiculaire à la première direction,
dans lequel la première antenne (31) et la deuxième antenne (41) sont capable d'une rotation synchrone l'une avec l'autre,
un système de guide d'ondes comprenant au moins un premier raccord rotatif est prévu pour le transfert d'énergie RF du système émetteur à une antenne émettrice,
**caractérisé en ce que** le système émetteur (50) génère un signal en mode H₁₁, transporté dans un premier guide d'ondes circulaire stationnaire qui est adapté pour s'intégrer dans un premier raccord rotatif, ledit raccord rotatif étant couplé entre des parties fixe et rotative et adapté pour raccorder les guides d'ondes circulaire utilisant des signaux en mode H₁₁ des deux côtés, et couplant en outre le signal à la première antenne (31) qui est une antenne circulaire et/ou conique, et
le système de guide d'ondes maintient l'orientation du champ électromagnétique ou la polarisation des ondes électromagnétiques constantes pendant la rotation, au moins sur un segment en arc de cercle du mouvement de balayage sur la bande transporteuse.

2. Système de scanner à ondes millimétriques pour le balayage d'objets (12, 13), comprenant :
- un moyen de transport (10) qui est une bande transporteuse adaptée pour transporter les objets (12, 13) dans une première direction (11),
- un système de mesure à ondes millimétriques comprenant au moins un système émetteur (50) couplé à une antenne (31) et un système récepteur (51) couplé à l'antenne (31), l'antenne (31) étant disposée à distance du moyen de transport et formant un intervalle à travers lequel les objets (12, 13) peuvent être transportés,
- un système de balayage pour un mouvement en arc de cercle de l'antenne (31) dans une direction approximativement perpendiculaire à la première direction,
dans lequel un système de guide d'ondes comprenant au moins un premier raccord rotatif est prévu pour le transfert de l'énergie RF du système émetteur à une antenne émettrice,
**caractérisé en ce que**
le système émetteur (50) génère un signal en mode H₁₁, transporté dans un premier guide d'ondes circulaire stationnaire qui est adapté pour s'intégrer dans un premier raccord rotatif, ledit raccord rotatif étant couplé entre des parties fixe et rotative et adapté pour raccorder les guides d'ondes circulaire utilisant des signaux en mode H₁₁ des deux côtés, et couplant en outre le signal à l'antenne (31) qui est une antenne circulaire, le système de guide d'ondes maintient l'orientation du champ électromagnétique ou la polarisation des ondes électromagnétiques constantes pendant la rotation, au moins sur un segment en arc de cercle du mouvement de balayage sur la bande transporteuse, l'antenne (31) transmet un signal (26) qui peut être au moins partiellement renvoyé par au moins un des objets (12, 13) et qui est à nouveau reçu par l'antenne (41),
le signal reçu est transmis au récepteur (51) en mode H₁₁ en passant par le premier guide d'ondes circulaire rotatif (32), le raccord rotatif (33) et le premier guide d'ondes circulaire stationnaire (34).

3. Système de scanner selon l'une quelconque des revendications précédentes, **caractérisé en ce que** le système émetteur (50) comprend un émetteur (39) destiné à produire un signal qui se propage à travers un premier guide d'ondes rectangulaire stationnaire (36) en mode H₁₀ via un convertisseur de mode (35) destiné à convertir un signal en mode H₁₀ en signal en mode H₁₁.

4. Système de scanner selon la revendication 1 ou 2, **caractérisé en ce que** le système émetteur (50) comprend un émetteur (39) pour produire un signal en mode H₁₁.

5. Système de scanner selon l'une quelconque des revendications précédentes, **caractérisé en ce que** le système récepteur (51) comprend un récepteur (49) destiné à recevoir un signal qui se propage à travers un premier guide d'ondes rectangulaire stationnaire en mode H₁₀ via un convertisseur de mode destiné à convertir un signal en mode H₁₁ en signal en mode H₁₀.

6. Système de scanner selon la revendication 1 ou 2, **caractérisé en ce que** le système récepteur (51) comprend un récepteur (49) destiné à recevoir un signal en mode H₁₁.

7. Système de scanner selon la revendication 1, **caractérisé en ce que** la deuxième antenne (41) est couplée au récepteur (49) par un raccord rotatif (43).

8. Système de scanner selon la revendication 7, **caractérisé en ce que** la deuxième antenne (41) est une antenne de section circulaire couplant un signal en mode H₁₁ jusqu'au récepteur (49) en passant par un deuxième guide d'ondes circulaire rotatif (42) et un deuxième raccord rotatif (43) ainsi que par un deuxième guide d'ondes circulaire stationnaire (44).

9. Système de scanner selon la revendication 7, **caractérisé en ce que** la deuxième antenne est une antenne (71) de section rectangulaire reliée au récepteur (49) par un guide d'ondes rectangulaire (72), un raccord rotatif (79) pour guide d'ondes rectangulaire et un autre guide d'ondes rectangulaire (78).

10. Système de scanner selon l'une quelconque des revendications précédentes, **caractérisé en ce que** le premier moyen de transport (10) est un convoyeur à bande.

11. Système de scanner selon l'une quelconque des revendications précédentes, **caractérisé en ce qu'**il est prévu une unité de traitement d'images (29) couplée au récepteur (49) et/ou à l'émetteur (39).

12. Système de scanner selon l'une quelconque des revendications précédentes, **caractérisé en ce qu'**un convertisseur de mode (35) produit et/ou reçoit un signal en mode H₁₁ de polarisation circulaire.
